# FASCICULE DE BREVET EUROPEEN

(11) **EP 0 731 009 B1**
(45) Date de publication et mention de la délivrance du brevet: **07.04.1999**
(21) Numéro de dépôt: 96400434.5
(22) Date de dépôt: 29.02.1996
(51) Int. Cl.: B60S 1/32

(54) **Essuie-glace pour véhicule automobile du type comportant un bras d'essuie-glace muni d'un talon de soulèvement venu de matière avec le bras**
Kraftfahrzeug-Scheibenwischer mit Wischerarm mit angeformter Hebevorrichtung
Windscreen wiper for a motor vehicle having a wiper arm equiped with a lifting device formed on the arm

(30) Priorité: 06.03.1995 FR 9502683
(43) Date de publication de la demande: 11.09.1996
(73) Titulaire: VALEO SYSTEMES D'ESSUYAGE, 78321 La Verrière (FR)
(72) Inventeur: Boissac, Jean-Paul, 86100 Chatellerault (FR)
(74) Mandataire: Kohn, Philippe

(56) Documents cités:
- DE-B- 1 087 482
- FR-A- 2 636 582
- US-A- 4 765 019

## Description

La présente invention concerne un essuie-glace pour véhicule automobile.

L'invention concerne plus particulièrement un essuie-glace pour véhicule automobile du type comportant un balai d'essuie-glace plaqué sur une vitre à essuyer par un bras d'essuie-glace articulé sur une tête d'entraînement en balayage alterné de l'essuie-glace, le bras comportant un talon agencé sur le bras d'essuie-glace qui, lorsque l'essuie-glace est au repos, coopère avec une face d'appui d'une rampe fixée sur le véhicule afin de soulever le bras d'essuie-glace pour au moins limiter la pression d'appui du balai d'essuie-glace au repos Un tel essuie-glace est du type divulgué, par exemple dans FR-A-2 636 582 ou US-A-4 765 019.

Lorsque l'essuie-glace est en position de repos, c'est-à-dire inactif, il n'est pas utile que la pression d'appui imposée par le bras d'essuie-glace sur le balai d'essuie-glace soit importante.

En effet, cette pression d'appui, qui se prolonge dans le temps, est susceptible de déformer la raclette d'essuyage de manière irréversible et de provoquer un phénomène de collage de la raclette d'essuyage.

On connaît des dispositifs qui permettent de soulager la pression d'appui du balai lorsque l'essuie-glace est en position de repos.

Il est notamment connu d'utiliser à cette fin un talon monté sur le bras d'essuie-glace qui coopère avec une rampe fixée sur le véhicule pour soulever légèrement le bras d'essuie-glace et réduire ainsi la pression d'appui du balai d'essuie-glace.

Toutefois, le montage d'un tel accessoire sur un bras d'essuie-glace forme une protubérance nuisible à l'esthétique de l'essuie-glace.

Par ailleurs, cela conduit à augmenter le nombre de pièces nécessaires à la réalisation de l'essuie-glace.

Dans le but d'apporter une solution à ces problèmes, l'invention propose un essuie-glace pour véhicule automobile du type vu précédemment, caractérisé en ce que le talon de soulèvement est réalisé venu de matière avec le bras d'essuie-glace.

Selon des modes de réalisation de l'invention :
- le bras d'essuie-glace et le talon de soulèvement sont réalisés par moulage ;
- le bras d'essuie-glace et le talon de soulèvement sont réalisés en matière plastique ;
- le balai d'essuie-glace comporte deux ailes latérales parallèles opposées, réunies sur leurs bords supérieurs par un dos sensiblement parallèle au plan de la vitre, et en ce que le talon prolonge le bord inférieur de l'une des deux ailes en direction de la rampe ;
- la rampe comporte un bec qui s'étend perpendiculairement à sa surface d'appui et qui coopère avec le talon pour déterminer la position angulaire de repos de l'essuie-glace.

D'autres caractéristiques et avantages de l'invention apparaîtront à la lecture de la description détaillée qui suit pour la compréhension de laquelle on se reportera aux dessins annexés dans lesquels :
- la figure 1 est une vue partielle en perspective d'une rampe et d'un bras d'essuie-glace selon l'invention;
- la figure 2 est une vue en perspective du montage d'un essuie-glace conforme aux enseignements de l'invention et prévu pour essuyer la vitre arrière d'un véhicule automobile ;
- la figure 3 est une vue en coupe d'un bras d'essuie-glace conforme à l'invention et d'une rampe fixée sur un véhicule automobile.

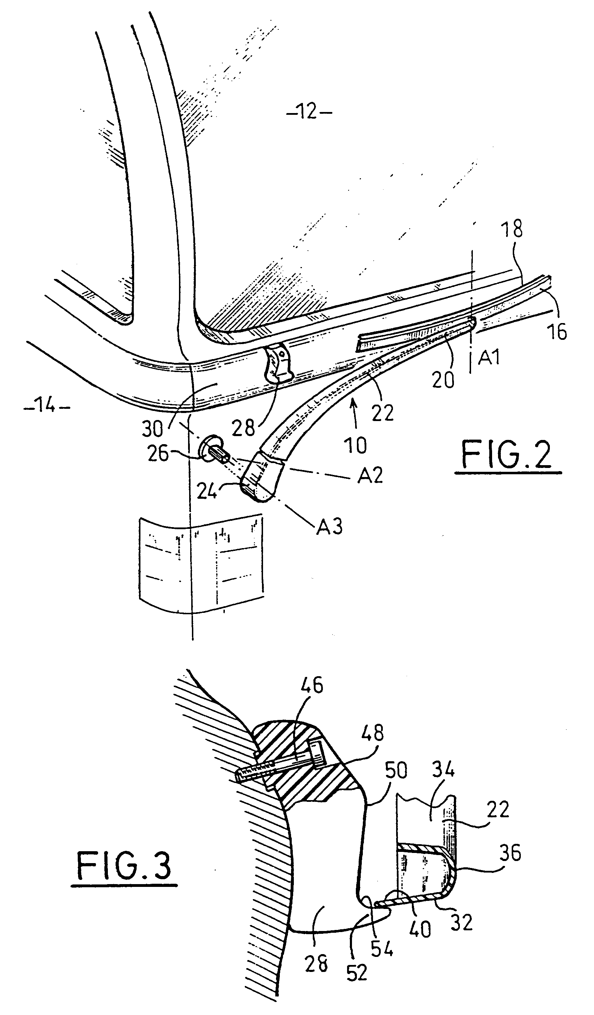

On a représenté sur la figure 2 un essuie-glace 10 prévu pour essuyer une vitre arrière 12 d'un véhicule automobile 14.

L'essuie-glace 10 comporte essentiellement un balai d'essuie-glace 16 qui porte une raclette 18 d'essuyage de la vitre 12 et qui est monté articulé, autour d'un axe A1 sensiblement parallèle au plan de la vitre 12, à l'extrémité libre 20 d'un bras d'essuie-glace 22.

Le bras 22 est monté pivotant sur une tête d'entraînement 24, autour d'un axe A2 sensiblement parallèle au plan de la vitre 12.

La tête 24 est montée à l'extrémité d'un arbre 26 d'entraînement en balayage alterné de l'essuie-glace 10, autour d'un axe A3 sensiblement perpendiculaire au plan de la vitre 12.

Le véhicule automobile 14 est par ailleurs muni d'une rampe 28 fixée sur un panneau de carrosserie 30 à la base de la vitre 12. La rampe 28 est prévue pour coopérer avec le bras 22 pour soulever l'essuie-glace 10 lorsque celui-ci est en position de repos et plus particulièrement pour soulager l'appui de la raclette 18 sur la vitre 12.

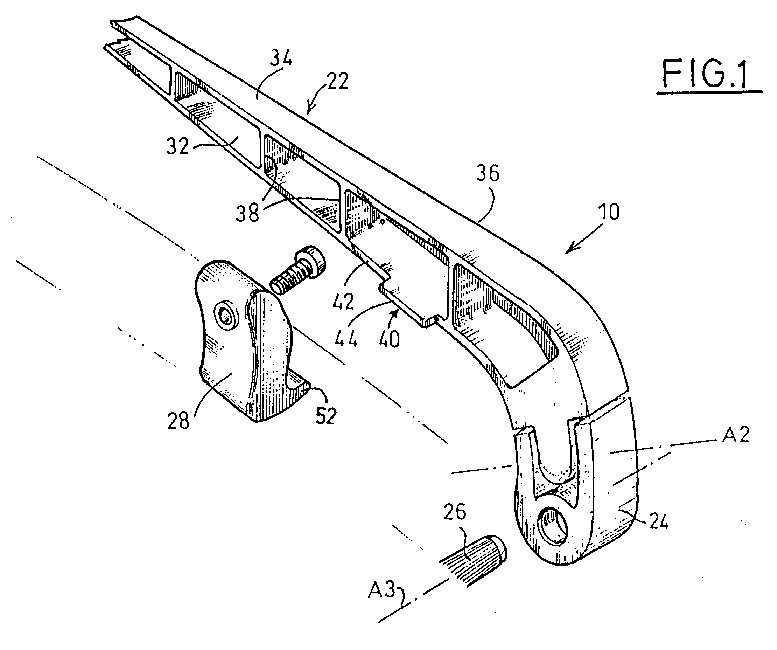

On a représenté plus précisément sur la figure 1 le bras d'essuie-glace 22 et la rampe 28.

Selon un mode préféré de réalisation de l'invention, le bras d'essuie-glace 22 est réalisé par moulage, notamment en matière plastique.

Cette technique, connue, permet notamment d'obtenir un bras d'essuie-glace 22 qui est léger et dont les formes se plient aisément aux exigences d'ordre esthétique.

Le bras d'essuie-glace 22 comporte notamment deux ailes latérales parallèles 32, 34 en vis-à-vis. Les ailes 32, 34, sensiblement perpendiculaires au plan de la vitre 12, sont réunies au niveau de leurs bords supérieurs par un dos supérieur 36 sensiblement parallèle au plan de la vitre 12.

Afin d'assurer une bonne rigidité tant en flexion qu'en torsion du bras 22, il est prévu par ailleurs des nervures 38 agencées dans l'espace compris entre les deux ailes latérales 32, 34 et le dos supérieur 36.

Conformément aux enseignements de l'invention, le bras d'essuie-glace 22 comporte un talon 40 de soulèvement réalisé venu de matière avec le bras d'essuie-glace 22.

Selon le mode de réalisation préféré représenté sur les figures, le talon de soulèvement 40 est réalisé sous la forme d'un prolongement de l'aile latérale 32 du bras d'essuie-glace 22, qui est l'aile qui est destinée à entrer la première en contact avec la rampe 28. Le talon 40 est agencé sur un bord inférieur 42 de l'aile 32, et il s'étend sensiblement en direction de la vitre 12 à essuyer.

Le talon de soulèvement 40 a une épaisseur sensiblement égale à celle de l'aile latérale 32 et son chant inférieur 44 en vis-à-vis de la vitre 12 à essuyer forme une surface d'appui destinée à coopérer avec la rampe 28.

Comme on peut le voir notamment sur la figure 3, la rampe 28 est fixée sur le panneau de carrosserie 30 du véhicule 14, par exemple par une vis 46.

La rampe 28 comporte un plan incliné 48 d'engagement prolongé vers le bas par une surface d'appui 50 qui est sensiblement parallèle au plan de la vitre 12.

La rampe 28 comporte par ailleurs un bec 52 qui est agencé en saillie transversale sur le bord inférieur 54 de la surface d'appui 50.

Le bec 52 est prévu pour coopérer avec le talon de soulèvement 40 afin de déterminer la position angulaire de repos de l'essuie-glace 10.

Lorsque l'essuie-glace 10 est en service, il est animé d'un mouvement de balayage alterné autour de l'axe A3.

Lorsque le conducteur arrête le fonctionnement de l'essuie-glace 10, le bras d'essuie-glace 22 descend du haut vers le bas par rapport à la rampe 28, en considérant la figure 2, pour arriver à la position de repos représentée sur la figure 3 qui est la position dite de "parking".

Dans son mouvement, le talon de soulèvement 40 du bras d'essuie-glace 22 entre en contact avec le plan incliné d'engagement 48 de la rampe 28 qui provoque ainsi le soulèvement progressif du bras d'essuie-glace 22.

Ensuite, le talon de soulèvement 40 poursuit son mouvement vertical en glissant sur la surface d'appui 50 de la rampe 28 jusqu'à arriver au niveau de son bord inférieur 54 au voisinage du bec 52.

La coopération de talon 40 avec la rampe 28 permet donc de soulever l'essuie-glace 10 et de déterminer angulairement la position de repos de l'essuie-glace 10.

## Revendications

1. Essuie-glace pour véhicule automobile (14) du type comportant un balai d'essuie-glace (16) plaqué sur une vitre (12) à essuyer par un bras d'essuie-glace (22) articulé sur une tête d'entraînement (24) en balayage alterné de l'essuie-glace (10), le bras (22) comportant un talon de soulèvement (40) agencé sur le bras d'essuie-glace (22) qui, lorsque l'essuie-glace est au repos, coopère avec une face d'appui (50) d'une rampe (28) fixée sur le véhicule (14) afin de soulever le bras d'essuie-glace (22) pour au moins limiter la pression d'appui du balai d'essuie-glace (16) au repos, caractérisé en ce que le talon de soulèvement (40) est réalisé venu de matière avec le bras d'essuie-glace (22).

2. Essuie-glace selon la revendication 1, caractérisé en ce que le bras d'essuie-glace (22) et le talon de soulèvement (40) sont réalisés par moulage.

3. Essuie-glace selon la revendication 2, caractérisé en ce que le bras d'essuie-glace (22) et le talon de soulèvement (40) sont réalisés en matière plastique.

4. Essuie-glace selon la revendication 3, caractérisé en ce que le balai d'essuie-glace (22) comporte deux ailes latérales parallèles (32, 34) opposées, réunies sur leurs bords supérieurs par un dos (36) sensiblement parallèle au plan de la vitre (12), et en ce que le talon (40) prolonge le bord inférieur de l'une des deux ailes (32, 34) en direction de la rampe (28).

5. Essuie-glace selon la revendication 4, caractérisé en ce que la rampe (28) comporte un bec (52) qui s'étend perpendiculairement à sa surface d'appui (50) et qui coopère avec le talon (40) pour déterminer la position angulaire de repos de l'essuie-glace (10).

## Claims

1. A windscreen wiper for a motor vehicle of the type comprising a windscreen wiper blade (16) placed against a windscreen (12) to be wiped by a windscreen wiper arm (22) articulated on a driving head (24) for producing an alternate wiping movement of the windscreen wiper (10), the arm (22) comprising a lifting heel (40) disposed on the windscreen wiper arm (22) which, when the windscreen wiper is inoperative, cooperates with a bearing face (50) of a ramp (28) fixed to the vehicle (14) so as to raise the windscreen wiper arm (22) to at least limit the bearing pressure of the windscreen wiper blade (16) when inoperative,
**characterised in that** the lifting heel (40) is formed with the windscreen wiper arm (22).

2. A windscreen wiper according to Claim 1,
**characterised in that** the windscreen wiper arm (22) and the lifting heel (40) are made by moulding.

3. A windscreen wiper according to Claim 2,
**characterised in that** the windscreen wiper arm (22) and the lifting heel (40) are made from plastics.

4. A windscreen wiper according to Claim 3,
**characterised in that** the windscreen wiper blade (22) comprises to opposite, parallel lateral wings (32, 34), which are joined at their upper edges by a back (36) substantially parallel to the plane of the windscreen (12),
**and in that** the heel (40) extends the lower edge of the one of the two wings (32, 34) towards the ramp (28).

5. A windscreen wiper according to Claim 4,
**characterised in that** the ramp (28) comprises a nose (52) which extends perpendicularly to its bearing surface (50) and which cooperates with the heel (40) to determine the angular inoperative position of the windscreen wiper (10).

## Patentansprüche

1. Scheibenwischer für ein Kraftfahrzeug (14), umfassend ein Scheibenwischerblatt (16), das auf eine zu wischende Scheibe (12) durch einen Scheibenwischerarm (22) angedrückt wird, der an einem Antriebskopf (24) für die Pendelwischbewegung des Scheibenwischers (10) angelenkt ist, wobei der Wischerarm (22) einen am Wischerarm (22) angeordneten Anhebesteg (40) umfaßt, der, wenn sich der Scheibenwischer im Ruhezustand befindet, mit einer Auflagefläche (50) einer am Fahrzeug (14) befestigten Rampe (28) zusammenwirkt, um den Scheibenwischerarm (22) anzuheben, um zumindest den Anpreßdruck des Wischerblatts (16) im Ruhezustand zu begrenzen, **dadurch gekennzeichnet,** daß der Anhebesteg (40) einstückig am Scheibenwischerarm (22) angeformt ist.

2. Scheibenwischer nach Anspruch 1 , **dadurch gekennzeichnet,** daß der Scheibenwischerarm (22) und der Anhebesteg (40) als Formteil ausgeführt sind.

3. Scheibenwischer nach Anspruch 2 , **dadurch gekennzeichnet,** daß der Scheibenwischerarm (22) und der Anhebesteg (40) aus Kunststoff ausgeführt sind.

4. Scheibenwischer nach Anspruch 3 , **dadurch gekennzeichnet,** daß das Scheibenwischerblatt (16) zwei gegenüberliegende parallele Seitenschenkel (32, 34) umfaßt, die an ihren Oberkanten durch einen zur Ebene der Scheibe (12) in etwa parallelen Rücken (36) verbunden sind, und daß der Steg (40) die Unterkante eines der beiden Schenkel (32, 34) in Richtung der Rampe (28) verlängert.

5. Scheibenwischer nach Anspruch 4 , **dadurch gekennzeichnet,** daß die Rampe (28) eine Nase (52) umfaßt, die sich senkrecht zur ihrer Auflagefläche (50) erstreckt und die mit dem Steg (40) zusammenwirkt, um die Winkelruheposition des Scheibenwischers (10) zu bestimmen.
